# EUROPEAN PATENT APPLICATION

(11) **EP 4 529 282 A1**
(43) Date of publication of application: **26.03.2025**
(21) Application number: 23199108.4
(22) Date of filing: 22.09.2023
(51) Int. Cl.: H04W 48/12, H04W 76/15, H04W 76/27

(54) **MULTI-CARRIER OPERATION**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP)
(74) Representative: Grünecker Patent- und Rechtsanwälte PartG mbB

(57) **Abstract**

The disclosure relates to a user equipment, a network node device, and respective methods for a user equipment and a network node. More specifically, the user equipment comprises a transceiver and a circuitry. The transceiver, in operation, receives a first physical layer signal in a first cell. The circuitry, in operation, determines, based on the received first physical layer signal and/or based on a predetermined configuration upon the reception of the first physical layer signal, a second cell, and performs one or more of (i) receiving a second signal transmitted in said second cell, and (ii) transmitting a third signal in said second cell.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates efficient multi carrier operation of communication devices.

In an embodiment, the techniques disclosed here feature an apparatus (e.g. a user equipment, UE). The apparatus comprises a transceiver and circuitry. The transceiver, in operation, receives a first physical layer signal in a first cell. The circuitry, in operation, determines, based on the received first physical layer signal and/or based on a predetermined configuration upon the reception of the first physical layer signal, a second cell, and performs one or more of (i) receiving a second signal transmitted in said second cell, and (ii) transmitting a third signal in said second cell.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a nonroaming scenario;
- **Fig. 6**: is a block diagram illustrating an exemplary functional structure of a network node and a user equipment;
- **Fig. 7**: is a block diagram illustrating an exemplary functional structure of the circuitry handling of a determination of a second cell that may be included in the exemplary user equipment of Fig. 6;
- **Fig. 8**: is a block diagram illustrating an exemplary functional structure of circuitry handling of a determination of a second cell that may be included in the exemplary network node equipment of Fig. 6;
- **Fig. 9**: is a flow chart illustrating exemplary steps performed by a user equipment;
- **Fig. 10**: is a flow chart illustrating exemplary steps performed by a network node;
- **Fig. 11**: exemplarily illustrates a switching between a low power state and a main radio state;
- **Fig. 12**: exemplarily illustrates a determination of a first cell and a determination of a second cell;
- **Fig. 13**: exemplarily illustrates a first cell and corresponding options for a second cell.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

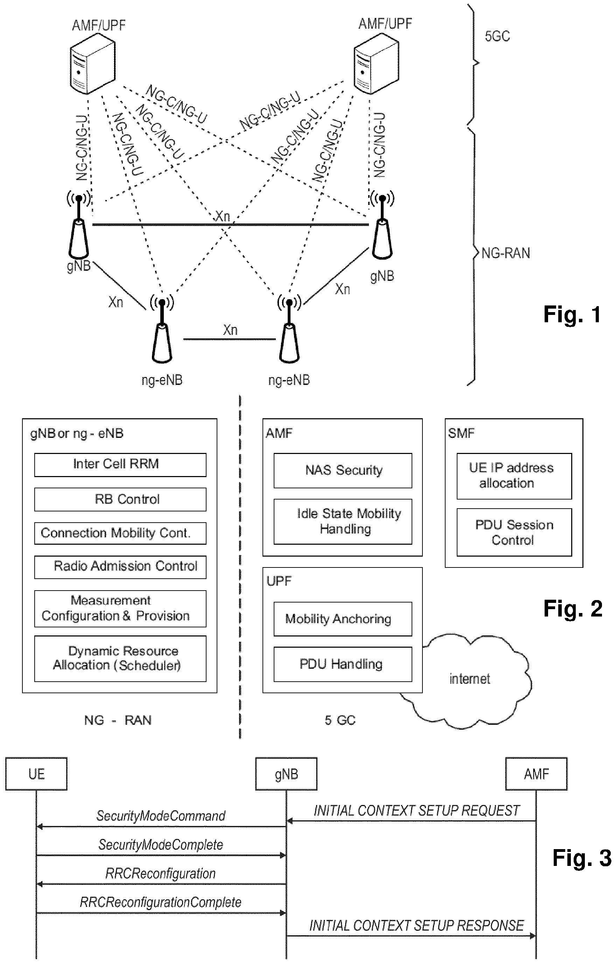

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC (Radio Resource Control) layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation *configuration.*

### Usage Scenarios of IMT for 2020 and beyond

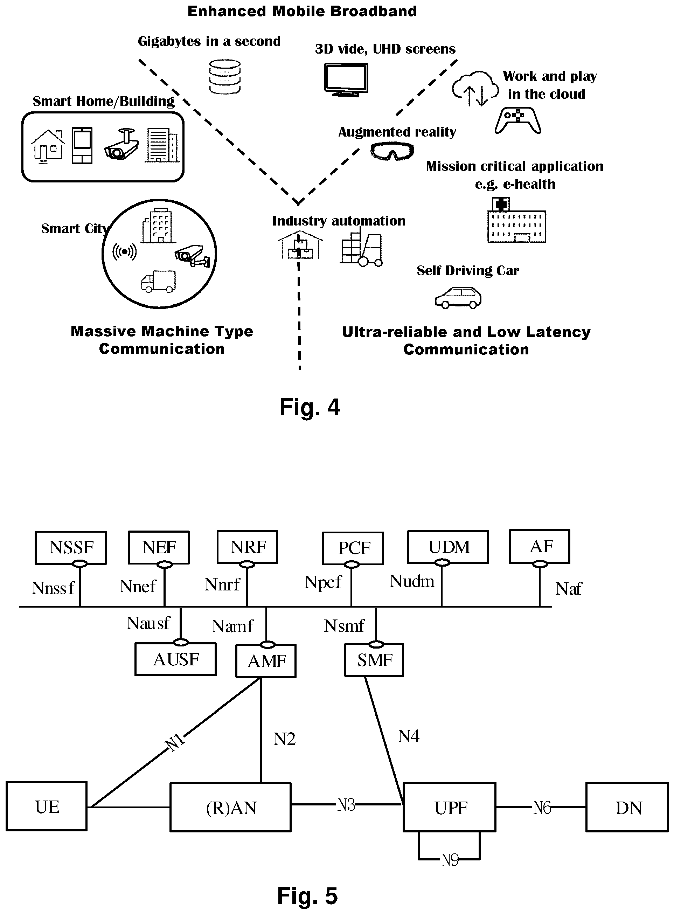

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Reference Signals

In the present disclosure, the reference signals are signals known to both a base station and a mobile station and each reference signal may be referred to as a Reference Signal (RS) or sometimes a pilot signal. The reference signal may be any of a Demodulation RS (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band. Each band may include one or more component carriers. Each component carrier constitutes a time-frequency resource grid including resource elements, each resource element defined by a subcarrier in frequency domain and a symbol in time domain.

### Communication

The present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signaling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### User Equipment

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Network node

In the present disclosure, the *base station* may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a *scheduling node* or *network node,* e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Transmission Configuration Indicator states and Quasi-Co-Location

As per 3GPP TS 38.214: "Physical layer procedures for data (Release 17)", v. 17.3.0, September 2022, two reference signals can have a quasi-co-located, QCL, relationship. Two antenna ports are said to be quasi co-located if properties of the channel over which a symbol on one antenna port is conveyed can be inferred from the channel over which a symbol on the other antenna port is conveyed.

In 5G NR systems, a transmission configuration indication (TCI) state is used to establish the quasi co-location (QCL) connection between a target reference signal (RS) and a source RS. The antenna ports QCL types are defined below:

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

TCI states are configured for PDCCH, PDSCH and channel state information reference signals (CSI-RS) in order to convey the QCL indication for the respective RS. In frequency range 1 (FR1, below 7.125 GHz) QCL Types A-C and in frequency range 2 (FR2, above 24.250 GHz) QCL types A-D are applicable. The QCL Type D for FR2 indicates that PDCCH/PDSCH/CSI-RS is transmitted with the same spatial filter as the reference signal associated with that TCI. In FR2, the network can indicate a transmit beam change for PDSCH or PDCCH by switching the TCI state.

Each TCI state can include a TCI state identifier, TCI state ID, and a RS set, or one or more individual RS(s), which are used for QCL reference. Each RS within a TCI state can be associated with a set of one or more Tx (transmit) and/or Rx (receive) beams.

### Power saving

A new study item has been started within 3GPP, aiming at studying and evaluating low-power wake-up receiver (LP-WUR) architectures and wake-up signal (LP-WUS) designs to support wake-up receivers. One of the targets is to achieve a substantial UE power saving gain. A report capturing this study item is available at http://www.3gpp.org and titled "Low-power Wake-up Signal and Receiver for NR as a Rel.18 SI topic" with contribution number RP-221271 from 3GPP TSG RAN meeting #96 in Hungary, June 6- 9, 2022.

Accordingly, power consumption depends on the configured length of wake-up periods, e.g., paging cycle. To meet the battery life requirements above, eDRX (extended Discontinuous Reception) cycle with large value is expected to be used, resulting in high latency, which may not be suitable for such services with requirements of both long battery life and low latency. Especially for latency-critical use cases, eDRX is not suitable.

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" sate during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- Wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured S
- Cell group. This indicates for which SCells the wake-up indication applies.

In more detail, Section 7.3.1.3.7 of 3GPP TS 38.212 v17.2.0 defines the Format 2_6. Accordingly, DCI format 2_6 is used for notifying the power saving information outside DRX Active Time for one or more UEs. The following information is transmitted by means of the DCI format 2_6 with CRC scrambled by PS-RNTI: *block number 1, block number 2,..., block number N.* The starting position of a block is determined by the parameter PSPositionDCl2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using format 2_6 DCI. The dormancy can be configured and applied for RRC CONNECTED UEs.

In Release17, a Paging Early Indication (PEI) design has been introduced. It employs DCI format 2_7. DCI format 2_7 is used to indicate UEwhether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB (System Information Block) and applied for paging monitoring of both RRC CONNECTED and IDLE/INACTIVE UEs.

If UEs are able to wake up only when they are triggered, e.g., paging, power consumption could be dramatically reduced. This can be achieved by using a wake-up signal to trigger the main radio and a separate receiver which has the ability to monitor wake-up signal with a very low power consumption. Main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

In other words, Release 18 LP-WUS/WUR design aims for LP-WUS, which is friendly for more efficient receiver structure, e.g. separate module for LP-WUS detection with relaxed requirement on time/frequency synchronization. The legacy design has been basically DCI-based, which requires UE to firstly measure one or more SSBs for AGC training and time/frequency synchronization before detection. Long active time for receiving and processing SSBs is the main source of power consumption.

### Low power operation

In a low power operation a UE may receive low power radio reference signals. Such a low power radio reference signal may include, for example, at least one or more of a Low Power Wake Up Signal (LP-WUS), a Low Power Synchronization Signal (LP-SS). Moreover, alternatively or in addition, a low power radio reference signal may include any reference signal that is suitable for performing measurements, such as any reference signals, which are defined by a standard. For example, a SSB or a CSI-RS may be used as a reference signal suitable for a measurement. In general, any signal that is suitable for performing measurements may be used as a low power radio reference signal.

An exemplary Low Power Radio (LR) operation may include measurements based on LP-WUS and/or LP-SS, or any legacy reference signal, such as, for example, one or more of a Primary Synchronization Signal (PSS), a Secondary Synchronization Signal (SSS), a physical broadcast channel demodulation reference signal (PBCH DMRS), in any of an RRC inactive mode or an RRC idle mode. Moreover, the LR operation may include measurements based on LP-WUS and/or LP-SS, or any legacy reference signal, such as PSS/SSS/PBCH DMRS in an RRC connected mode. A time and/or frequency tracing may be performed in the LR operation using one or more of a SSB, a CSI-RS, a LP-WUS or a LP-SS. In such an exemplary LR operation a control channel and/or a control signal, such as, for example, an LP-WUS indicating PDCCH monitoring or a paging signal, may be monitored.

In general, the terms "low power" (LP) and "low power radio" (LR) are used as synonyms with throughout the description.

Such a LR operation may be performed as an alternative and/or in addition to a Main Radio operation (MR). For example, a MR operation and a LR operation may use different respective hardware in an UE. For example, a MR operation and a LR operation may use a same hardware in an UE. For example, an UE may comprise a LR transceiver, a LR circuitry, a MR transceiver, and a MR circuitry. For example, said LR transceiver and said LR circuitry may perform the low power operation, whereas the MR transceiver and the MR circuitry may perform the main operation. For example, the LR circuitry and the MR circuitry may be included in a same physical circuity.

In any of said exemplary cases, a MR operation and a LR operation may provide different functionalities of an UE in a respective operational mode. For example, an UE while being in an LR operation mode may perform one or more of the functionalities that are also available in a MR operation mode. The terms "operation", "operational mode", "mode", "state" and "operational state" are used as synonyms with respect to the low power radio and/or the main radio throughout the description.

An exemplary Main Radio (MR) operation may include measurements based on SSBs and/or CSI-RS in any of an RRC inactive mode or an RRC idle mode. Moreover, the MR operation may include measurements based on SSBs and/or CSI-RS in an RRC connected mode. A time and/or frequency tracing may be performed in the MR operation using one or more of a SSB, a CSI-RS, a LP-WUS (Low Power Wake Up Signal) or a LP-SS (Low Power Synchronization Signal). In such an exemplary MR operation a control channel, such as, for example, PDCCH, may be monitored.

In other words, a MR reference signal may include at least one or more of a SSBs and a CSI-RS.

The present invention is not limited by such exemplary MR and LR operations. MR and LR operation, especially time/frequency tracking and control channels monitoring, may or may not be explicitly reflected in a standard specification depending on whether MR or LR hardware to operate one or more of the above function(s), but may only nominate which channel, signal and/or reference signal to receive/monitor/measure. Which channel to be measure, e.g., by RRM measurement, may imply MR or LR operation of one or more other channels.

For example, in LR operation, an UE may use specific low power reference signals. In other words, when the UE performs the low power operation, the receiving of the reference signal includes a receiving of the low power radio (LR) reference signal.

Such a low-power reference signal may include a more simplified waveform (relatively to a non-low-power reference signal). For example, an on-off keying (OOK) modulation and/or a frequency-shift keying (FSK) modulation allow for a lower complexity receiver (relatively to a MR receiver) to receive and monitor said low-power reference signal. Such a low-power reference signal may be, for example, a LP-WUS, which may indicate that UE is to perform a MR operation. Such a low power reference signal may be, for example, LP-SS provides reference signal for time/frequency domain tracking/synchronization and/or RRM measurement.

When the UE does not perform the low power operation, the receiving of the reference signal includes a receiving of a main radio (MR), reference signal. For example, when not performing a low power operation, the UE may perform a MR operation, a combination of MR and LR operation, or the like.

For example, such a MR reference signal may be a SSB and/or a CSI-RS. The present disclosure is not limited to these exemplary reference signals. In general, any other suitable reference signal may be used for performing a measurement.

A switching between LR operation and not LR operation may be performed when a preconfigured condition is fulfilled.

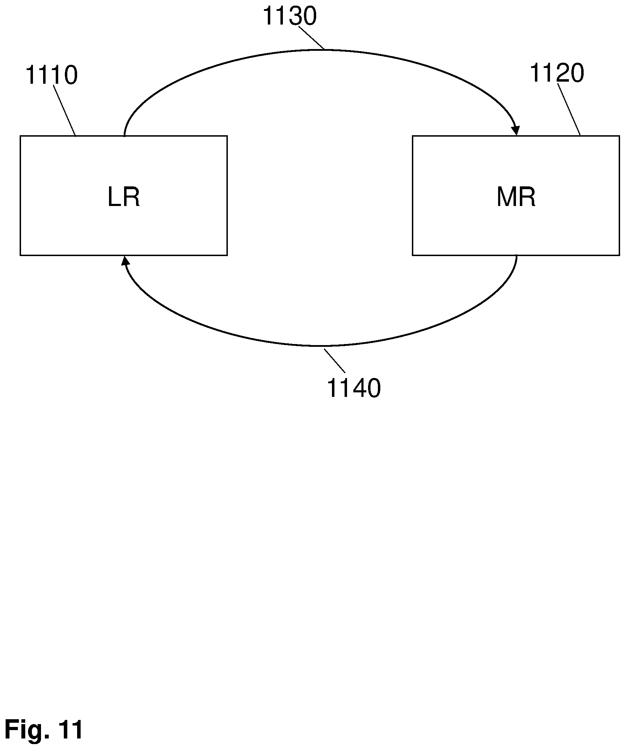

A transitioning between LR operation and MR operation is exemplarily illustrated as a state machine of two states in **Fig. 11****.** The two states are represented by the LR operation 1110 and the MR operation 1120. When a first preconfigured condition, is fulfilled the UE transitions 1140 from the MR operation to the LR operation. For example, the first preconfigured condition may include whether a MR measurement result is higher than a preconfigured threshold. Such a threshold may be defined by a standard, a configuration indication received by the UE, or the like.

For example, such a transitioning to the LR operation may save UE power by offloading measurement to LR operation when the channel condition is good, e.g. not cell edge or the like.

When a second preconfigured condition is fulfilled, the UE according to the exemplary implementation in Fig. 11 may transition 1130 from the LR operation to the MR operation. For example, the second preconfigured condition may include whether a LR measurement result is lower than a predefined threshold, which may be different from the threshold for the transitioning from the MR operation to the LR operation. Similarly as above, such a threshold for the transitioning from the LR operation to the MR operation may be defined by a standard, a configuration that is received by the UE, or the like.

For example, such a transitioning to the MR operation may ensure an accuracy performance of a measurement. Thus, by switching of the states based on a preconfigured condition facilitates UE power saving and maintaining acceptable measurement performance.

### UE measurements and measurement reporting

UE measurements are used for cell selection, cell reselection, power control calculation, mobility procedures and beam management. Measurements are performed for a measurement object. In the current L1 beam measurement framework, a measurement object, which refers to a set of RSs, e.g. SSBs and/or CSI-RS, is semi-statically configured by RRC.

A result of such a measurement may include, for example, a Reference Signal Received Power, RSRP, value or a Reference Signal Received Quality, RSRQ, value or a Signal-to-Noise and Interference Ratio, SINR, value. However, the present disclosure is not limited to said examples. Any other suitable result of a measurement may be used.

An UE performs a measurement and reports the measurement results to the serving gNB of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.
According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the lEs *CSI-IM-Resource,* and SSB-*Index.*
2) List of *CSI-ResourceConfig* lEs
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetId, CSI-IM-ResourceSetId,* and/or *CSI-SSB-ResourceSetId)*
3) List of CSI-ReportConfig lEs.
   - Different *CSI-ReportConfig* in the list configures different CSI report instance. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config)*
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In particular, the Information Element (IE) *CSI-MeasConfig* and the Information Element CSI-*ReportConfig* indicate parameters of the CSI reporting framework usable by the UE to measure and then report the measurement results.

One possible following sequence of lEs for defining measurement and report according to the CSI framework includes:
- *CellGroupConfig* IE
   ∘ the *ServingCellConfig* IE of *SpCellConfig* or of *SCellConfig*
   ▪ *CSI-MeasConfig* IE
   - *CSI-ResourceConfig* IE
      ∘ *NZP-CSI-RS-ResourceSet*
         ▪ *NZP-CSI-RS-Resource*
      ∘ *CSI-SSB-ResourceSet*
         ▪ *SSB-Index*
      ∘ *CSI-IM-ResourceSet*
         ▪ *CSI-IM-Resource*
   - *CSI-ReportConfig* IE

Details for said framework are provided, for example, in 3GPP TS 38.331, section 6.3.2.

### Embodiments

As mentioned above, long active time for receiving and processing reference signals, such as SSBs and CSI-RSs, is the main source of power consumption. Such a processing of reference signals includes, for example, measurements and maybe a corresponding reporting. Thus, it may be desirable to reduce power consumption for such processing.

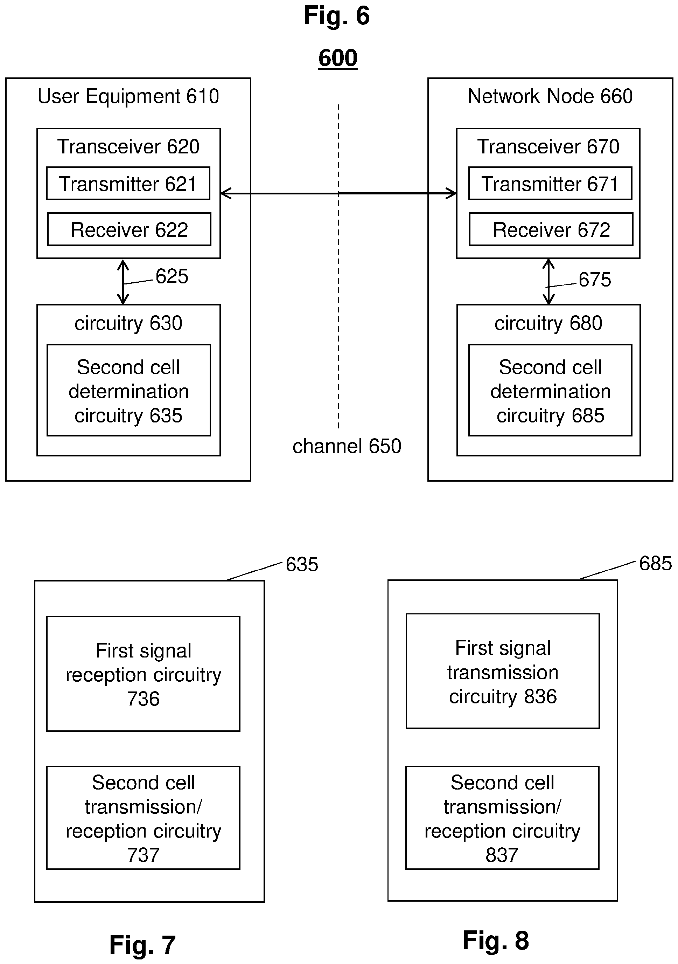

The present disclosure provides a network node and a user equipment well as a corresponding methods and programs. For instance, an integrated circuit can control a process of a UE or base station. As illustrated in **Fig. 6****,** user equipment 610 and network node 660 may communicate with each other over a wireless channel in a wireless communication system. For instance, the user equipment may be a NR user equipment, and the network node may be a base station or scheduling node such as a eNB, or a NR gNB, in particular a gNB in a Non-Terrestrial Network (NTN) NR system. An example of such communication system is illustrated in Fig. 6. The communication system 600 may be a wireless communication system in accordance with the technical specifications of 5G, in particular a NR communication system. However, the present disclosure is not limited to 3GPP NR and may also be applied to other wireless or cellular systems such as NTNs.

Fig. 6 illustrates a general, simplified and exemplary block diagram of a user equipment 610 (also termed communication device) and a network node 660. However, in general, a scheduling device may also be a terminal in case of a sidelink connection between two terminals. Moreover, in particular with respect to the use cases of URLLC; eMBB, and mMTC, the user equipment 610 may also be a sensor device, a wearable device, or a connected vehicle, or a controller of an automated machine in an industrial factory. Further, a user equipment 610 may be able to function as a relay between network node 660 and another communication device (e.g. the disclosure is not limited to communication "terminals" or user "terminals").

The UE and eNB/gNB are communicating with each other over a (wireless) physical channel 650 respectively using their transceivers 620 (UE side) and 670 (network node side). Together, the network node 660 and the terminal 610 form the communication system 600. The communication system 600 may further include other entities such as those shown in Fig. 1.

As shown in **Fig. 6** (left-hand side), according to a first exemplary embodiment, a user equipment (UE) 610 is provided. The UE 610 comprises a transceiver 620 and circuitry 630. The exemplary transceiver 620 in Fig. 6 includes a receiver 622. The exemplary transceiver 620 in Fig. 6 further includes a transmitter 621.

The transceiver 620, in operation, receives a first physical layer signal. The circuitry 630, in operation, determines, based on the received first physical layer signal and/or based on a predetermined configuration upon the reception of the first physical layer signal, a second cell. For example, the UE may be (pre)configured to interpret an indication included in the first physical layer signal in order to determine the second cell. For example, the UE may be (pre)configured according to a received configuration, according to a standard or the like in order to determine the second cell. In addition, the UE may determine a second cell based on both, a received first physical layer signal and a predetermined configuration.

Such a predetermined configuration may be predetermined by a standard, a received configuration, or the like. A received configuration may be transmitted, for example, by a network node. For example, the received configuration may be an RRC configuration or any other suitable configuration.

Moreover, the circuitry 630 performs one or more of (i) receiving a second signal transmitted in said second cell, and (ii) transmitting a third signal in said second cell. The second signal may be a second physical layer signal. Similarly, the third signal may be a third physical layer signal.

In general, the circuitry 630 may control the transceiver 620, which may include the transmitter 621 and the receiver 622, to receive and/or transmit data. This is illustrated by an arrow 625 which represents schematically an interface between the circuitry 630 and the transceiver 620, over which the control is performed. For example, the circuitry 630 may control 625 the transceiver 620 to receive at least one first physical layer signal.

Moreover, the UE 610 may receive a second signal in a second cell. The UE 610, in particular the circuitry 630 may further control 625 the transceiver 620 to receive said second signal. Furthermore, the UE 610 may transmit a third signal in the second cell. The UE 610, in particular the circuitry 630 may further control 625 the transceiver 620 to transmit said third signal. As indicated above, the transceiver 620 may further comprise a transmitter 621, which may transmit said third signal.

**Fig. 7** shows an exemplary functional structure of the circuitry 630, in particular, the circuitry 635 handling a determination of a second cell, i.e. a determination in which cell the UE 610 may perform further reception of a second signal and/or transmission of a third signal. As shown, the second cell determination circuitry 635 may include a first signal reception circuitry 736. For example, the second cell determination circuitry 635 may include an additional second cell transmission/reception circuitry 737. More specifically, circuitry 736 may receive a first physical layer signal. The second cell transmission/reception circuitry 737 may transmit a third signal and/or receive a second signal in the second cell.

For example, by determining a second cell based on reception of a first physical layer signal, a more efficient operation of an UE 610 for multiple cells/carriers is facilitated. For example, a physical layer signal transmitted in one cell may control the operations of other cell(s) for better efficiency.

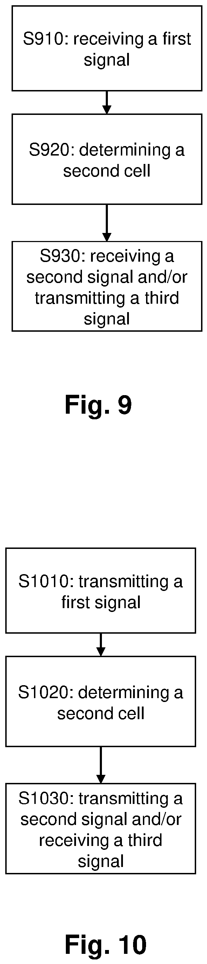

In correspondence with the above-described UE, a method for receiving a physical layer signal by a user equipment is provided. As shown in Fig. 9, the method comprises the steps of:
- receiving S910 a first physical layer signal;
- determining S920, based on the received first physical layer signal and/or based on a predetermined configuration upon the reception of the first physical layer signal, a second cell, and
- performing S930 one or more of the following:
   ∘ receiving a second signal transmitted in said second cell,
   ∘ transmitting a third signal in said second cell.

As also shown in Fig. 6 (right-hand side), a network node 660 is provided. The network node 660 comprises a transceiver 670 and a circuitry 680. The transceiver 670, in operation, transmits a first physical layer signal in a first cell to a UE 610. The circuitry 680, in operation, determines, based on the transmitted first physical layer signal and/or based on a predetermined configuration, a second cell. Moreover, the circuitry 680 performs one or more of (i) transmit a second signal in said second cell, and (ii) receive a third signal in said second cell.

In general, the circuitry 680 may control the transceiver 670 to receive and/or transmit data. This is illustrated by an arrow 675, which represents schematically an interface between the circuitry 680 and the transceiver 670, over which the control is performed. For example, the circuitry 680 may instruct 675 the transceiver 670 to transmit the first physical layer signal.

The exemplary transceiver 670 in Fig. 6 includes a receiver 672. The exemplary transceiver 620 in Fig. 6 further includes a transmitter 671.

**Fig. 8** shows an exemplary functional structure of the circuitry 680, in particular, the second cell determination circuitry 685. In particular, the second cell determination circuitry 685 may include a first signal transmission circuitry 836. For example, the second cell determination circuitry 685 may include an additional second cell transmission/reception circuitry 837. Circuitry 836 may be responsible for transmitting a first physical layer signal to a UE 610. Furthermore, circuitry 837 may be responsible for receiving a third signal and/or transmitting a second signal in the second cell.

For example, by determining a second cell based on transmission of a first physical layer signal, a more efficient operation of a network node for multiple cells/carriers is facilitated. For example, a physical layer signal transmitted in one cell may control the operations of other cell(s) for better efficiency, e.g. by a subsequent muting and/or unmuting of said other cells.

For example, the network node 660 may transition from a low power operation to a non-low power operation in the second cell upon transmitting the first physical layer signal. Such a transition may include an unmuting of the second cell. In other words, a low power operation of a cell may include a muting of SSB and SIB in said cell. By muting cells, a power saving on the network side may be facilitated.

Furthermore, in correspondence with the above-described network node 660, a method to be performed by a network node 660 for transmitting a physical layer signal is provided. As shown in **Fig. 10****,** the method comprising the step of:
- transmitting S1010 a first physical layer signal;
- determining S1020, based on the transmitted first physical layer signal and/or based on a predetermined configuration, a second cell, and
- performing S1030 one or more of the following:
   ∘ transmitting a second signal in said second cell,
   ∘ receiving a third signal in said second cell.

The UE 610 may comprise the transceiver 620 and a (processing) circuitry 630, and the network node 660 may comprise the transceiver 670 and a (processing) circuitry 680. The transceiver 610 in turn may comprise and/or function as a receiver and/or a transmitter. In this disclosure, in other words, the term "transceiver" is used for hardware and software components that allow the communication device 610, or, respectively base station 660 to transmit and/or receive radio signals over a wireless channel 650. Accordingly, a transceiver corresponds to a receiver, a transmitter, or a combination of a receiver and a transmitter.

Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only transmits signals. Moreover, the term "circuitry" includes processing circuitry formed by one or more processors or processing units, etc. The circuitries 630 and 680 (or processing circuitries) may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data.

The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

It is further noted that any of the steps/operations/methods described below may be performed or controlled by the circuitry 630 (on the UE side) and/or the circuitry 680 (on the network node side).

In the further description, the details and embodiments apply to each of the user equipment, the network node and the methods unless explicit statement or context indicates otherwise. Moreover, it is noted that any of the steps described below may be included as code instructions in a program, which may be executed by one or more processors (e.g. the circuitry 630 and/or the circuitry 680).

It is noted that the terms "cell", "carrier" and "frequency" used throughout the description may substitute each other. For example, the above-mentioned first cell may correspond to a first carrier in a first band, a first frequency, or a first bandwidth part (BWP) within a first cell or carrier. Similarly, the above-mentioned second cell may correspond to a second carrier in the first band, a second carrier in a second band, a second frequency, or a second bandwidth part within a second cell or carrier.

For example, the first cell may be a same cell as the second cell. For example, the first cell may be a part of the second cell. For example, the second cell may be a part of the first cell. For example, the first cell may be overlapping with the second cell. For example, the first cell may be different from the second cell.

For example, one cell out of the first and the second cell may be bigger than the respective other cell, e.g. the one cell may be a macro cell. The other cell may be smaller, e.g. a micro or pico cell within or adjustable and overlapping with the macro cell.

For example, one cell out of the first and the second cell may be a wider frequency cell. The respective other cell may be a smaller bandwidth cell within the wider frequency cell range.

In an exemplary implementation, the UE 610 may monitor the first cell for receiving the first physical layer signal, while being in an inactive or idle mode. In other words, the UE 610 may not be in a connected state, such as RRC_CONNECTED, when monitoring the first cell for the first physical layer signal.

Such an inactive mode may be, for example, a RRC_INACTIVE state. Such an idle mode may be, for example, a RRC_IDLE state. Further details on RRC stated are exemplarily discussed in section *RRC connection setup and reconfiguration procedures.*

For example, the first physical layer signal is a low-power wake-up signal (LP-WUS). In addition, the LP-WUS may be received in a low power operation of the UE 610. Such LP wake-up signals as well as a low power operation are further explained in sections *Power saving* and *Low power operation.* The LP-WUS may be transmitted from the network node 660 to the UE 610.

In other words, when the UE 610 receives a LP-WUS as the first physical layer signal, the UE 610 may be in a low power operation. However, the present disclosure is not limited to the UE 610 being in low power operation for the reception of a LP-WUS. Instead, the UE 610 may be in a non-low power operation such as a main radio operation, or a non-low power operation comprising of both main radio and low power operation.

When the UE 610 is in a low power operation when receiving the LP-WUS as a first physical layer signal, the UE 610 may transition from the low power operation to a non-low power operation in the second cell for receiving the second signal and/or transmitting the third signal. Such a transitioning from a low-power operation to a non-low-power operation may be performed for one or more cells, the one or more cells including the second cell. UE power saving may be facilitated by monitoring LP-WUS using LR and measuring less cells, compared with monitoring legacy SSB.

In addition upon receiving the first physical layer signal in the first cell, the UE may transition from a low power operation to a non-low power operation in the first cell. Alternatively, the UE may remain in a low-power operation in the first cell, while transitioning to a non-low power operation in the second cell.

For example, the first physical layer signal may be a paging signal in a PDCCH. More specifically, for example, the first physical layer signal may be a DCI field within a paging PDCCH. More specifically, for example, the first physical layer signal may be the short message indicator field within a paging PDCCH. And more specifically, for example, the first physical layer signal may be the short message field within a paging PDCCH. And more specifically, for example, the first physical layer signal may utilize the reserved field within a paging PDCCH. A paging PDCCH described can be a DCI format 1_0 with CRC scrambled by P-RNTI.

For example, the first physical layer signal may be a paging signal in a PDSCH. More specifically, for example, the first physical layer signal may be a paging message or paging record in a PDSCH scheduled by a paging PDCCH. For example, the first physical layer signal may be a Paging Early Indicator (PEI) for a paging signal. A PEI may be signaled via a Downlink Control Information (DCI) message carried in the PDCCH, e.g. in DCI format 2_7, or via a Reference Signal, e.g. the Secondary Synchronization Signal, or the like. For example, the first physical layer signal may be a control information, such as a DCI, in a PDCCH. Each type of the exemplary first physical layer signals may be transmitted from the network node 660 to the UE 610.

Further details on paging signal, reference signals and channels are discussed in sections 5G *NR system architecture and protocol stacks* and *Downlink control channel monitoring, PDCCH, DCI*

Furthermore, the first physical layer signal may include any combination of the one or more following signals: LP-WUS, a paging signal in a PDCCH, a paging signal in a PDSCH, a PEI for a paging signal in a PDCCH and/or PDSCH, a control information in a PDCCH.

In an exemplary implementation, a cell out of one or more cells may be determined as the first cell. In particular, the circuitry included in the UE 610 may determine a cell as the first cell. Such a determination may be performed before receiving the first physical layer signal in said first cell. Such a determination may be based on, for example, a configuration, which indicates a priority for a cell out of the one or more cells. In addition or alternatively, such a determination may be based on, for example, a channel quality of said cell.

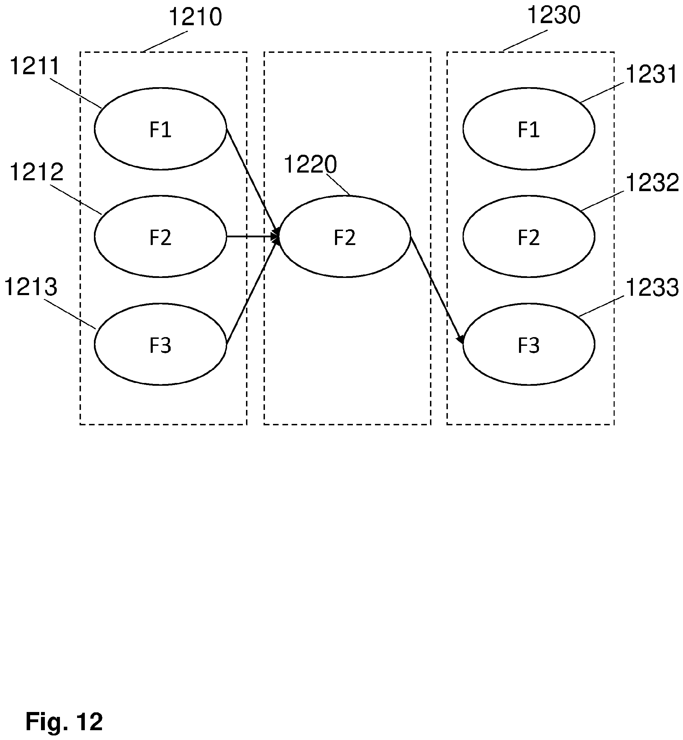

Such a determination of the first cell is exemplary illustrated in Fig. 12. The exemplary set of cells 1210 includes a cell F1 1211, a cell F2 1212 and a cell F3 1213. The number of cells in a set of cells is not limited to three cells. In general, such a set of cells may include one or more cells. The UE 610 may determine a cell 1220 out of the set of cells 1210 as a first cell. In the example of Fig. 12, the UE 610 determines cell F2 as first cell 1220. The first cell may be monitored for receiving a first physical layer signal.

As mentioned above, such a first physical layer signal may be, for example, a LP-WUS signal. So, in the exemplary implementation according to Fig. 12, the first cell F2 1220 may be monitored for the reception of a LP-WUS signal. However, the present invention is not limited to such a LP-WUS signal. As explained above, any other suitable signal or any combination thereof may be used as a first physical layer signal.

The first cell may be selected based on a configuration, which indicates a priority for a cell out of the one or more cells. The configuration may configure the so-called priority of frequencies, which indicates a priority for respective cells. Based on such a priority of frequencies a UE 610 may decide which cell is to be monitored and/or on which cell the UE 610 camps.

For example, a priority of frequencies may be defined for a LP-WUS operating frequency. Such a newly defined priority of frequencies for a LP-WUS operating frequency may be applicable for capable UEs. The LP-WUS operation may be distinguished from the legacy frequency priority and has no impact to legacy system operation.

In an exemplary implementation, a priority for selecting a first cell may be a legacy frequency priority. Such a legacy frequency priority is defined, for example, in 3GPP TS38.304, Sec 5.2.4. Said priority may be set higher for a LP-WUS operating cell than for other cells, which have priorities assigned. Such an exemplary implementation may have less specification impact by reusing a previously defined priority. Network energy saving may be facilitated by prioritizing a cell operating LP-WUS, which may serve both legacy and LP-WUS capable UEs.

The UE 610 may receive an indication including the configuration indicating a priority for a cell. Such an indication may be transmitted from a network node 660 to the UE 610. The circuitry included in the UE 610 may instruct the transceiver to receive such an indication.

For example, the priorities of different frequencies (cells) may be common for different UEs. Such common priorities may be configured using a SIB configuration. Such an exemplary configuration using SIB may facilitate a reduced control overhead and a lower complexity of a gNB operation.

For example, the priorities of different frequencies (cells) may be different for different UEs. Such priorities may be configured, for example, using a RRC configuration or a NAS configuration. Such an exemplary configuration using RRC or NAS may facilitate network capacity offloading among different cells by allowing different group of UEs monitoring different cells.

For example, one or multiple groups (sets) of cells may be configured to a UE 610. The UE 610 may measure only one of cell within each group (set) of cells, i.e., said one cell has higher priority than other cells within the group (set). If only one cell is configured, UE 610 may utilize said cell. By selecting a cell as the first cell, UE side power saving is facilitated as less cells are measured. Moreover, network side energy saving is facilitated as gNB may choose to switch OFF some cells (which have lower priorities or are not yet configured to UE), e.g., through muting the first signal.

The first cell may be selected based on a channel quality of said cell. In order to obtain a channel quality of a cell a measurement may be performed. A measurement may be performed for a cell, which is a candidate cell for determining the first cell. In the exemplary implementation according to Fig. 12, there is a first set of cells 1210, which includes three exemplary candidate cells for determining the first cell. By performing such a measurement, a measurement result for a channel quality of a cell may be obtained. The cell may be a cell out of one or more candidate cells for determining the first cell.

Such a measurement may be for example, a RSRP based measurement, a RSRQ based measurement, a SINR based measurement, or the like. Further details regarding measurements are given above in section *UE measurements and measurement reporting.*

As explained above, the UE 610 may obtain a measurement result for a channel quality of a cell out of one or more candidate cells for determining the first cell, and the determining of the first cell is based on a channel quality.

The channel quality may be measured based on LP-WUS or part of LP-WUS, such as, for example, LP-SS (synchronization signal). Such a measurement may be performed in a low power operation of the UE 610. Such a LP-WUS-based measurement may facilitate a reduced power consumption by measuring using low power radio operation. However, the present disclosure is not limited to measurements based on LP-WUS. Any other suitable signal may be used including the various options, which have been explained above for the first physical layer signal.

In a first example, the determining the first cell based on a channel quality includes selecting a cell out of the one or more candidate cells as the first cell, which has a highest channel quality among the one or more candidate cells. In other words, the UE 610 may select the first cell based on the best channel quality. Such a selection provides a simplified operation with reduced specification impact.

In a second example, the determining the first cell based on a channel quality includes selecting a cell out of the one or more candidate cells as the first cell, which has a channel quality that is above a predetermined threshold. In other words, the UE 610 may select the first cell based on comparison between the measured channel quality and a preconfigured threshold.

Such a determining of the first cell may increase possibilities of offloading UEs to different cells, as long as service quality requirement according to the preconfigured threshold is met. Such a determination may also decrease the number of channel quality measurements that the UE may need to perform, as long as the first measured cell channel quality out of multiple candidate cells is above the predetermined threshold, thus achieving additional UE power saving.

Such a predetermined threshold may be predetermined by a standard, a received configuration including said threshold, or the like. A received configuration may be transmitted, for example, by a network node 660. For example, the received configuration may be an RRC configuration or any other suitable configuration.

The threshold may be a common threshold or a different threshold for respective cells (frequencies). A common threshold provides a simplified processing. Different thresholds for different cells may increase possibilities of offloading UEs to different cells.

For example, the threshold may be a legacy parameter, such as defined, for example, in 3GPP TS38.304, Sec 5.2.4. The value of the threshold may be set differently for cells (frequencies) operating LP-WUS from those cells not operating LP-WUS. Reusing a threshold defined in the standard may decrease the impact on the specification.

For example, the threshold may be a newly defined parameter, which may be applicable for the cells (frequencies) operating LP-WUS. Such a newly defined parameter may facilitate more flexible controlling for LP-WUS capable UEs. Moreover, it may be controlled on which cells LP-WUS capable UEs should camp.

For example, the predetermined threshold may be a same threshold for a plurality of cells. For example, there may be a respective predetermined threshold for each cell out of the plurality of cells. Said respective thresholds may have a same value or different values.

The threshold(s) of the cells (frequencies) may be different between legacy UEs and LP-WUS capable UEs.

The threshold(s) of the cells (frequencies) may be different among LP-WUS capable UEs. In other words, a UE 610 out of two or more LP-WUS capable UEs may be configured with a predetermined threshold, which differs from a predetermined threshold configured for another UE 610 out of two or more LP-WUS capable UEs. A common threshold may reduce signaling overhead, whereas different thresholds may facilitate individual control of UEs.

In a third example, the determining the first cell based on a channel quality includes selecting a cell out of the one or more candidate cells as the first cell, which has a highest channel quality among the one or more candidate cells and has a channel quality that is above a predetermined threshold. The predetermined threshold may be determined and/or preconfigured as explained above for the second example.

In the exemplary implementation according to Fig. 12, upon receiving the first physical layer signal, the UE 610 may determine a cell out of a second set of cells 1230 as a second cell. The second set of cells may be identical to the first set of cells or may be different. In the example of Fig. 12, the second set of cells 1230 is the same as the first set of cells 1210. In other words, the second set of cells 1230 includes the cell F1 1231, the cell F2 1232 and the cell F3 1233. However, the present invention is not limited to the second set being a same set as the first set of cells. In general, the second set of cells may include the first set of cells, may have an overlap with the first set of cells, may be part of the first set of cells or may be different from the first set of cells.

Furthermore, in the exemplary implementation according to Fig. 12, the UE 610 selects cell F3 1233 as the second cell based on the received first signal and/or a predetermined configuration.

For example, the second cell may be determined according to an indication included in the first physical layer signal. In other words, the first physical layer signal may directly indicate a cell, group of cells as a second cell and/or BWP within the second cell.

For example, the second cell may be determined as a cell, which is fixed by a standard. For example, the UE 610 may receive a configuration indication that specifies a second cell. For example, a default second cell may be defined by a standard, which may be updated on UE side when receiving a configuration indication that specifies a second cell. A successful detection of the first signal may trigger the UE selection of one or more second cells and/or BWPs according to such a predetermined cell or configuration including an indication for a second cell.

For example, the second cell may be determined according to a predetermined association of one or more cells with the first cell. Such an association may be fixed by a standard. For example, the UE 610 may receive a configuration indication including such an association of one or more cells with the first cell. For example, a default association may be defined by a standard, which may be updated on UE side when receiving a configuration indication.

When a UE 610 detects a first signal in the first cell, the UE 610 may select the second cell(s) and/or BWP based on a cell index of the first cell. Such an association between a first cell (index) and one or more second cells and/or BWPs may be fixed or configurable.

The association may be an association according to a mapping relation (e.g., by a table). The association may be an association according to a calculation based on the first cell. An exemplary calculation may map a first cell index #1 onto a set of the candidate second cell index {# i, #j, #k,...}. A first cell index #2 may be mapped onto a set of the candidate second cell index {# l, #m, #n,...}. Moreover, instead of a cell index a BWP index may be used. Furthermore, a combination of cell index and BWP index may be used.

For example, the second cell may be determined according to a predetermined rule based on a UE identity. For example, the second cell may be determined according to a predetermined configuration including a rule for a calculation based on a UE identity. Such a rule may be fixed by a standard. For example, the UE 610 may receive a configuration indication including such a rule for a calculation based on a UE identity. For example, a default rule may be defined by a standard, which may be updated on UE side when receiving a configuration indication (from a network node 660). A successful detection of the first signal may trigger the UE selection of one or more second cells and/or BWPs, which may be calculated using UE ID. A cell index may be calculated as a function f(x) of the UE ID, e.g. Cell_index = f(UE_ID) = UE_ID mod N, where N is the number of cells in a possible cell set.

Summarizing, the determining of the second cell, based on the received first physical layer signal and/or based on a predetermined configuration upon the reception of the first physical layer signal, includes being based on one or more of
- an indication included in the first physical layer signal,
- a predetermined cell or configuration including an indication for a second cell,
- a predetermined association or configuration including an association of one or more cells with the first cell, and
- a predetermined rule or configuration including a rule for a calculation based on a UE identity, ID.

UE offloading to different cells may avoid traffic congestion and may facilitate network energy saving by controlling which cells will be ON to serve UEs.

Any of the above-mentioned indications, configurations, configuration indications, associations and/or rules for the determining of the second cell may be obtained by circuitry included in the network node 660. The network node may transmit any of the obtained indications, configurations, configuration indications, associations and/or rules for the determining of the second cell to the UE 610. For example, the network node 660 may transmit a higher layer configuration for the determining of the second cell to the UE 610. For example, such a higher layer configuration may be a MAC-CE, a RRC configuration, or the like.

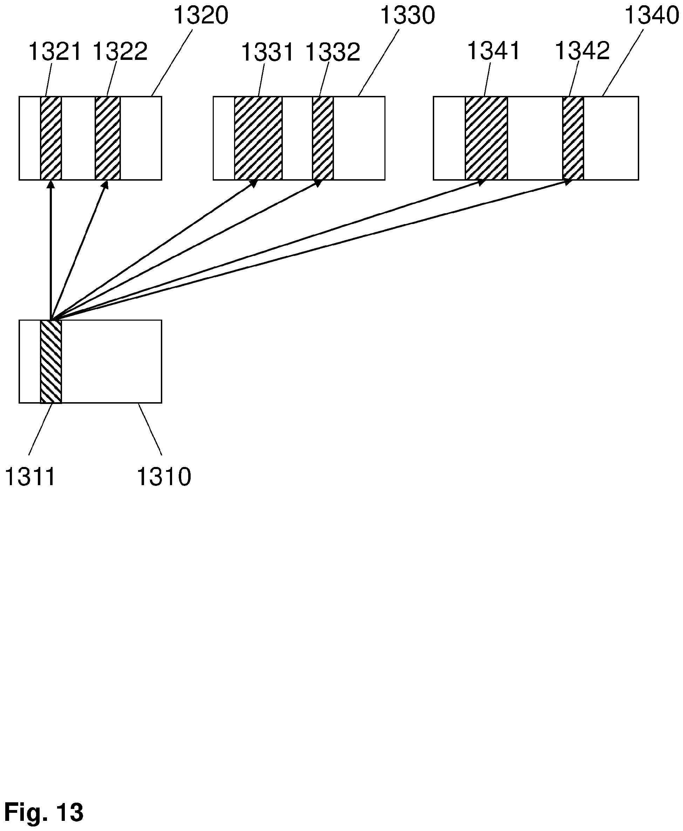

**Fig. 13** illustrates various options for a second cell, in case the UE 610 camps/monitors in a first carrier (first cell) 1311 in a first band 1310. For example, the second cell may be the same carrier 1321 in the first band 1320 as the first carrier 1311. For example, the second cell may be a second carrier 1322 in the first band 1320. For example, the second cell may be a first carrier 1331 and/or a second carrier 1332 in a second band 1330. For example, the second cell may be a first carrier 1341 and/or a second carrier 1342 in a third band 1340.

As mentioned above, the UE 610 may perform one or more of a reception of a second signal transmitted in said second cell, and a transmission of a third signal in said second cell. Such a second signal may be transmitted from a network node 660 to the UE 610.

In the exemplary implementation according to Fig. 12, the UE 610 may be triggered by the first physical layer signal to start receiving the second signal and/or transmitting the third signal. For example, upon the reception of a LP-WUS signal, the UE 610 may transmit a preamble in a PRACH signal as a third signal. For example, upon the reception of the first physical layer signal, the UE 610 may monitor the second cell F3 1233 in order to receive a SSB/SIB as a second signal.

Such a second signal may be, for example, one or more of a SSB, a SIB, a paging signal in a PDCCH, a paging signal in a PDSCH, a control information in a PDCCH, a CSI-RS, and/or a LP-WUS. For the reception of a LP-WUS as second signal, the UE 610 may be in a low power radio operation or in a main radio operation or in a non-low radio power operation. Such a control information in a PDCCH may be, for example, a DCI.

Moreover, a resource of the second signal may be determined (by the UE) according to an indication included in the first physical layer signal. In addition or alternatively, a resource of the second signal may be determined (by the UE) according to a preconfigured indication for the resource of the second signal. Such a preconfigured indication may be fixed by standard, configured by a configuration received from a network node 660, or the like. In addition or alternatively, a resource of the second signal may be determined according to a calculation based on a UE ID to obtain a resource index. A resource index may be calculated as a function f(x) of the UE ID, e.g. Resource_index = f(UE_ID) = UE_ID mod N, where N is the size of the possible resource set.

For SSB, a resource may be one or more of a time/frequency resource, a sequence, and/or a SSB/beam index. For SIB, a resource may be one or more of a search space of scheduling PDCCH, a CORESET of scheduling PDCCH, a time/frequency resource of PDSCH and/or a SSB/beam index. For PDCCH, a resource may be one or more of a search space/CORESET of scheduling PDCCH, monitoring occasions and/or a SSB/beam index. For paging PDCCH, a resource may be one or more of a search space/CORESET, a PF (paging frame) and/or PO (paging occasion), and/or a SSB/beam index. For CSI-RS, a resource may be one or more of a SSB/beam index, a sequence, a time/frequency resource, a CSI-RS set configuration and/or CSI-RS configuration. For LP-WUS, a resource may be one or more of time/frequency resource, a sequence, and/or a monitoring occasion.

Such a resource allocation facilitates increased flexibility with less control overhead and latency.

The network node 660 may transmit an indication for a type of the second signal and/or an indication for the resource of the second signal to the UE 610. For example, the network node may obtain a first physical layer signal including an indication for the second signal. The network node may transmit said first physical layer signal including the indication for the second signal to the UE 610.

For example, the network node 660 may transmit a higher layer configuration including indication for a type of the second signal and/or an indication for the resource of the second signal to the UE 610. For example, such a higher layer configuration may be a MAC-CE, a RRC configuration, or the like.

As mentioned above, in the exemplary implementation according to Fig. 12, the UE 610 may transmit a third signal upon the reception of the first physical layer signal.

Such a third signal may be, for example, one or more of a preamble in a PRACH, a scheduling request (SR) in a PRACH, a SR in a PUCCH, a SRS, a control information in a PUSCH and/or a preamble in a PRACH and payload in PUSCH. The third signal may be transmitted from the UE 610 to a network node 660.

Moreover, a resource of the third signal may be determined (by the UE) according to an indication included in the first physical layer signal. In addition or alternatively, a resource of the third signal may be determined (by the UE) according to a preconfigured indication for the resource of the third signal. Such a preconfigured indication may be fixed by standard, configured by a configuration received from a network node 660, or the like. In addition or alternatively, a resource of the third signal may be determined according to a calculation based on a UE ID to obtain a resource index. A resource index may be calculated as a function f(x) of the UE ID, e.g. Resource_index = f(UE_ID) = UE_ID mod N, where N is the size of the possible resource set.

For PRACH, a resource may be one or more of random access occasions, a time/frequency resource, a preamble sequence and/or a beam/SSB index. For SR (PUCCH based), a resource may be one or more of a time/frequency resource, a PUCCH resource set, a PUCCH resource index within a set, a preamble sequence and/or a beam/SSB-index. For SRS, a resource may be one or more of a time/frequency resource, a sequence, a SRI and/or a beam/SSB-index. For PUSCH, a resource may be one or more of a time/frequency resource and/or a SRI. Such a resource allocation facilitates increased flexibility with less control overhead and latency.

The network node 660 may transmit an indication for a type of the third signal and/or an indication for the resource of the third signal to the UE 610. For example, the network node may obtain a first physical layer signal including an indication for the third signal. The network node may transmit said first physical layer signal including the indication for the third signal to the UE 610.

For example, the network node 660 may transmit a higher layer configuration including indication for a type of the third signal and/or an indication for the resource of the third signal to the UE 610. For example, such a higher layer configuration may be a MAC-CE, a RRC configuration, or the like.

In addition, the resource of the second signal may be associated with one or more TCI states. Similarly, the resource of the third signal may be associated with one or more TCI states. TCI states are explained in detail in section *Transmission Configuration Indicator states and Quasi-Co-Location.* The network node 660 may transmit an indication including an association of one or more TCI states with a resource of the second signal to the UE 610. Analogously, the network node 660 may transmit an indication including an association of one or more TCI states with a resource of the third signal to the UE610. For example, the UE is RRC configured (by the base station) with a list of TCI states. A MAC CE from the network node 660 may activate a group of TCI states from said list. A TCI state may be selected from the activated TCI states using a DCI with either format 1_1 or 1_2.

Moreover, the second cell, the second signal and/or the third signal may be configured by a SIB from the first cell, a RRC configuration from the first cell, a NAS configuration, or any combination thereof.

Any of the above mentioned configuration, indications, configuration indications, parameters, and/or thresholds, which are received by the UE 610 for configuration, may be transmitted by a network node 660 to said UE 610. In particular, the circuitry included in the network node 660 may instruct the transceiver included in the network node 660 to transmit any of the above-mentioned indications or the like to the UE.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment (UE) is provided. The UE comprises a transceiver and a circuitry. The transceiver, in operation, receives a first physical layer signal in a first cell. The circuitry, in operation, determines, based on the received first physical layer signal and/or based on a predetermined configuration upon the reception of the first physical layer signal, a second cell, and performs one or more of the following: (i) receive a second signal transmitted in said second cell, and (ii) transmit a third signal in said second cell.

According to a second aspect provided in addition to the first aspect, the circuitry, in operation, monitors the first cell while being in an inactive or idle mode for receiving the first physical layer signal.

According to a third aspect provided in addition to any of the first or second aspects, the first physical layer signal is a low-power wake-up signal, LP-WUS, which optionally is received in a low power operation of the UE.

According to a fourth aspect provided in addition to the third aspect, the UE transitions from the low power operation to a non-low power operation in the second cell for receiving the second signal and/or transmitting the third signal.

According to a fifth aspect provided in addition to any of the first or second aspects, the first physical layer signal is one or more of
- a paging signal in a Physical Downlink Control Channel, PDCCH,
- a paging signal in a Physical Downlink Shared Channel, PDSCH,
- a Paging Early Indicator, PEI, for a paging signal in a PDCCH,
- a control information in a PDCCH.

According to a sixth aspect provided in addition to any of the first to fifth aspects, the first cell is
- a same cell as the second cell,
- a part of the second cell,
- overlapping with the second cell, or
- different from the second cell.

According to a seventh aspect provided in addition to any of the first to sixth aspects, the circuitry, in operation, further determines a cell out of one or more cells as the first cell before receiving the first physical layer signal in said first cell, wherein the determination is based on one or more of (i) a configuration, which indicates a priority for a cell out of the one or more cells, and (ii) a channel quality of said cell.

According to an eighth aspect provided in addition to the seventh aspect, the circuitry, in operation, further receives an indication including the configuration indicating a priority for a cell.

According to a ninth aspect provided in addition to any of the seventh to eighth aspects, the circuitry, in operation, further obtains a measurement result for a channel quality of a cell out of one or more candidate cells for determining the first cell, and the determining the first cell based on a channel quality includes one or more of (i) selecting a cell out of the one or more candidate cells as the first cell, which has a highest channel quality among the one or more candidate cells, and (ii) selecting a cell out of the one or more candidate cells as the first cell, which has a channel quality that is above a predetermined threshold.

According to a tenth aspect provided in addition to any of the first to ninth aspects, the determining of the second cell, based on the received first physical layer signal and/or based on a predetermined configuration upon the reception of the first physical layer signal, includes being based on one or more of
- an indication included in the first physical layer signal,
- a predetermined cell or configuration including an indication for a second cell,
- a predetermined association or configuration including an association of one or more cells with the first cell, and
- a predetermined rule or configuration including a rule for a calculation based on a UE identity, ID.

According to a eleventh aspect provided in addition to any of the first to tenth aspects, the second signal is one or more of
- a Synchronization Signal Block, SSB,
- a System Information Block, SIB,
- a paging signal in a PDCCH,
- a paging signal in a PDSCH,
- a control information in a PDCCH,
- a Channel State Information Reference Signal, CSI-RS, and
- a LP-WUS.

According to a twelfth aspect provided in addition to any of the first to eleventh aspects, the circuitry, in operation, further determines a resource of the second signal based on one or more of
- an indication included in the first physical layer signal,
- a preconfigured indication for the resource of the second signal, and
- a calculation based on a UE identity, ID, to obtain a resource index.

According to a thirteenth aspect provided in addition to any of the first to twelfth aspects, the third signal is one or more of
- a preamble in a Physical Random Access Channel, PRACH,
- a scheduling request, SR, in a PRACH,
- a SR in a Physical Uplink Control Channel, PUCCH,
- a Sounding Reference Signal, SRS,
- a control information in a physical uplink shared channel, PUSCH, and
- a preamble in a PRACH and payload in PUSCH.

According to a fourteenth aspect provided in addition to any of the first to thirteenth aspects, the circuitry, in operation, further determines a resource of the third signal based on one or more of
- an indication included in the first physical layer signal,
- a preconfigured indication for the resource of the second signal, and
- a calculation based on a UE identity, ID, to obtain a resource index.

According to a fifteenth aspect provided in addition to any of the twelfth to fourteenth aspects, the resource of the second signal is associated with one or more transmission configuration indication, TCI, states.

According to a sixteenth aspect provided in addition to any of the twelfth to fifteenth aspects, the resource of the third signal is associated with one or more TCI states.

According to a seventeenth aspect provided in addition to any of the first to sixteenth aspects, the second cell, the second signal and/or the third signal is configured by one or more of
- a SIB from the first cell,
- a Radio Resource Control, RRC, configuration from the first cell, and
- a Non-Access Stratum ,NAS, configuration.

According to an eighteenth aspect, a network node is provided. The network node comprises a transceiver and a circuitry. The transceiver, in operation, transmits a first physical layer signal in a first cell to a user equipment, UE. The circuitry, in operation, determines, based on the transmitted first physical layer signal and/or based on a predetermined configuration, a second cell, and performs one or more of the following: (i) transmit a second signal in said second cell, and (ii) receive a third signal in said second cell.

According to a nineteenth aspect provided in addition to the eighteenth aspect, the circuitry in operation, further, transitions from a low power operation to a non-low power operation in the second cell upon transmitting the first physical layer signal.

According to a twentieth aspect, a method for a user equipment, UE, is provided. The method comprises
- receiving a first physical layer signal;
- determining, based on the received first physical layer signal and/or based on a predetermined configuration upon the reception of the first physical layer signal, a second cell, and
- performing one or more of the following:
   ∘ receiving a second signal transmitted in said second cell,
   ∘ transmitting a third signal in said second cell.

According to a twenty-first aspect, a method for a network node is provided. The method comprises
- transmitting a first physical layer signal;
- determining, based on the transmitted first physical layer signal and/or based on a predetermined configuration, a second cell, and
- performing one or more of the following:
   ∘ transmitting a second signal in said second cell,
   ∘ receiving a third signal in said second cell.

According to a twenty-second aspect, an integrated circuit is provided, which, in operation, controls a process of a user equipment, the process comprising the following steps performed by the user equipment:
- receiving a first physical layer signal;
- determining, based on the received first physical layer signal and/or based on a predetermined configuration upon the reception of the first physical layer signal, a second cell, and
- performing one or more of the following:
   ∘ receiving a second signal transmitted in said second cell,
   ∘ transmitting a third signal in said second cell.

According to a twenty-third aspect an integrated circuit is provided, which, in operation, controls a process of a network node, the process comprising the following steps performed by the network node:
- transmitting a first physical layer signal;
- determining, based on the transmitted first physical layer signal and/or based on a predetermined configuration, a second cell, and
- performing one or more of the following:
   ∘ transmitting a second signal in said second cell,
   ∘ receiving a third signal in said second cell.

According to a twenty-fourth aspect, a program stored on a storage medium and including code instructions, which, when executed on one or more processors of a user equipment, cause the one or more processors to execute the following steps:
- receiving a first physical layer signal;
- determining, based on the received first physical layer signal and/or based on a predetermined configuration upon the reception of the first physical layer signal, a second cell, and
- performing one or more of the following:
   ∘ receiving a second signal transmitted in said second cell,
   ∘ transmitting a third signal in said second cell.

According to a twenty-fifth aspect, a program stored on a storage medium and including code instructions, which, when executed on one or more processors of a network node, cause the one or more processors to execute the following steps:
- transmitting a first physical layer signal;
- determining, based on the transmitted first physical layer signal and/or based on a predetermined configuration, a second cell, and
- performing one or more of the following:
   ∘ transmitting a second signal in said second cell,
   ∘ receiving a third signal in said second cell.

Summarizing, the disclosure relates to a user equipment, a network node device, and respective methods for a user equipment and a network node. More specifically, the user equipment comprises a transceiver and a circuitry. The transceiver, in operation, receives a first physical layer signal in a first cell. The circuitry, in operation, determines, based on the received first physical layer signal and/or based on a predetermined configuration upon the reception of the first physical layer signal, a second cell, and performs one or more of (i) receiving a second signal transmitted in said second cell, and (ii) transmitting a third signal in said second cell.

## Claims

1. A user equipment, UE, comprising:
a transceiver, which in operation:
receives a first physical layer signal in a first cell;
circuitry, which in operation:
determines, based on the received first physical layer signal and/or based on a predetermined configuration upon the reception of the first physical layer signal, a second cell, and
performs one or more of the following:
- receive a second signal transmitted in said second cell,
- transmit a third signal in said second cell.

2. The UE according to claim 1, wherein the circuitry, in operation, monitors the first cell while being in an inactive or idle mode for receiving the first physical layer signal.

3. The UE according to any of claims 1 or 2, wherein the first physical layer signal is a low-power wake-up signal, LP-WUS, which optionally is received in a low power operation of the UE.

4. The UE according to claim 3, wherein the UE transitions from the low power operation to a non-low power operation in the second cell for receiving the second signal and/or transmitting the third signal.

5. The UE according to any of claims 1 or 2, wherein the first physical layer signal is one or more of
- a paging signal in a Physical Downlink Control Channel, PDCCH,
- a paging signal in a Physical Downlink Shared Channel, PDSCH,
- a Paging Early Indicator, PEI, for a paging signal in a PDCCH,
- a control information in a PDCCH.

6. The UE according to any of the claims 1 to 5, wherein the circuitry, in operation, further determines a cell out of one or more cells as the first cell before receiving the first physical layer signal in said first cell, wherein the determination is based on one or more of
- a configuration, which indicates a priority for a cell out of the one or more cells,
- a channel quality of said cell.

7. The UE according to claim 6, wherein the circuitry, in operation, further receives an indication including the configuration indicating a priority for a cell.

8. The UE according to any of the claims 6 to 7, wherein the circuitry, in operation, further
obtains a measurement result for a channel quality of a cell out of one or more candidate cells for determining the first cell, and
the determining the first cell based on a channel quality includes one or more of
- selecting a cell out of the one or more candidate cells as the first cell, which has a highest channel quality among the one or more candidate cells,
- selecting a cell out of the one or more candidate cells as the first cell, which has a channel quality that is above a predetermined threshold.

9. The UE according to any of the claims 1 to 8, wherein the determining of the second cell, based on the received first physical layer signal and/or based on a predetermined configuration upon the reception of the first physical layer signal, includes being based on one or more of
- an indication included in the first physical layer signal,
- a predetermined cell or configuration including an indication for a second cell,
- a predetermined association or configuration including an association of one or more cells with the first cell, and
- a predetermined rule or configuration including a rule for a calculation based on a UE identity, ID.

10. The UE according to any of the claims 1 to 9, wherein the second signal is one or more of
- a Synchronization Signal Block, SSB,
- a System Information Block, SIB,
- a paging signal in a PDCCH,
- a paging signal in a PDSCH,
- a control information in a PDCCH,
- a Channel State Information Reference Signal, CSI-RS, and
- a LP-WUS,
and the circuitry, in operation, further determines a resource of the second signal based on one or more of
- an indication included in the first physical layer signal,
- a preconfigured indication for the resource of the second signal, and
- a calculation based on a UE identity, ID, to obtain a resource index.

11. The UE according to any of the claims 1 to 10, wherein the third signal is one or more of
- a preamble in a Physical Random Access Channel, PRACH,
- a scheduling request, SR, in a PRACH,
- a SR in a Physical Uplink Control Channel, PUCCH,
- a Sounding Reference Signal, SRS,
- a control information in a physical uplink shared channel, PUSCH, and
- a preamble in a PRACH and payload in PUSCH,
and the circuitry, in operation, further determines a resource of the third signal based on one or more of
- an indication included in the first physical layer signal,
- a preconfigured indication for the resource of the second signal, and
- a calculation based on a UE identity, ID, to obtain a resource index.

12. A network node, comprising:
a transceiver, which in operation:
transmits a first physical layer signal in a first cell to a user equipment, UE;
circuitry, which in operation:
determines, based on the transmitted first physical layer signal and/or based on a predetermined configuration, a second cell, and
performs one or more of the following:
- transmit a second signal in said second cell,
- receive a third signal in said second cell.

13. The network node according to claim 12, wherein the circuitry in operation, further, transitions from a low power operation to a non-low power operation in the second cell upon transmitting the first physical layer signal.

14. A method for a user equipment, UE, for receiving a physical layer signal, the method comprising:
receiving a first physical layer signal;
determining, based on the received first physical layer signal and/or based on a predetermined configuration upon the reception of the first physical layer signal, a second cell, and
performing one or more of the following:
- receiving a second signal transmitted in said second cell,
- transmitting a third signal in said second cell.

15. A method for a network node for transmitting a physical layer signal, the method comprising:
transmitting a first physical layer signal;
determining, based on the transmitted first physical layer signal and/or based on a predetermined configuration, a second cell, and
performing one or more of the following:
- transmitting a second signal in said second cell,
- receiving a third signal in said second cell.
